# EUROPEAN PATENT APPLICATION

(11) **EP 3 690 374 A1**
(43) Date of publication of application: **05.08.2020**
(21) Application number: 19154601.9
(22) Date of filing: 30.01.2019
(51) Int. Cl.: F28D 20/00

(54) **HEAT ACCUMULATOR WITH PRESSURE LOSS REGULATION**

(71) Applicant: Siemens Gamesa Renewable Energy GmbH & Co. KG, 20097 Hamburg (DE)
(72) Inventor: Pagelsen, Niels, 22303 Hamburg (DE); Schmunck, Viktor, 21039 Börnsen (DE); Skoeries, Constanze, 25436 Uetersen (DE); Wagner, Jennifer Verena, 20257 Hamburg (DE)
(74) Representative: Aspacher, Karl-Georg

(57) **Abstract**

The present invention relates to a heat accumulator (1) comprising a heat exchange chamber (2) having a lower portion and an upper portion and being configured to accommodate therein heat storage elements for storing thermal energy, wherein the heat exchange chamber (2) comprises an inlet (3) which is configured to supply a working fluid into the heat exchange chamber (2). A first pressure loss regulating device (4) is arranged within the flow of the working fluid in the heat exchange chamber (2) and configured to pass the working fluid through, wherein the first pressure loss regulating device (4) is configured to form a first flow resistance for a flow of the working fluid in the first pressure loss regulating device (4) being different to a flow resistance for a flow of the working fluid in the heat exchange chamber (2) adjacent and outside the first pressure loss regulating device (4).

## Description

### Field of invention

The present invention relates to heat accumulator and to a method of operating a heat accumulator.

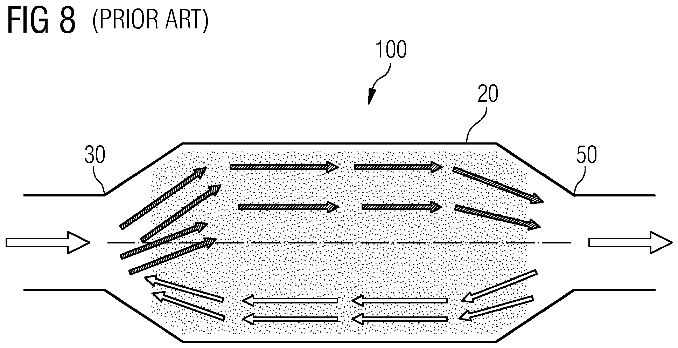

Fig. 8 shows a conventional heat accumulator 100 comprising a heat exchange chamber 20 having a lower portion and an upper portion and being configured to accommodate heat storage elements therein for storing thermal energy. The heat exchange chamber 20 comprises an inlet 30 at the left-hand side of Fig. 8, which is configured to supply a hot working fluid into the heat exchange chamber 20. The hot working fluid is indicated by arrows from the left to the right side in Fig. 8. The heat exchange chamber 20 comprises an outlet 50 for the hot working fluid at the right-hand side of Fig. 8.

The outlet 50 is also configured to supply a cold working fluid into the heat exchange chamber 20. The cold working fluid is indicated by arrows from the right to the left side in Fig. 8. The inlet 30 and the outlet 50 can are structurally be configured as a combined in- and outlet, respectively. That means, the hot working fluid leaves the heat exchange chamber 20 via the outlet 50, and the cold working fluid leaves the heat exchange chamber 20 via the inlet 30.

The heat accumulator 100 is configured to accommodate heat storage elements for storing thermal energy. The heat storage elements can consist of stones, in particular lava stones, ceramic elements, brick elements, granite or basalt. The storage elements are provided as bulk material and have a high thermal storage capacity.

The hot working fluid can be water, hot or relatively cold steam, air, nitrogen or argon, etc. The hot working fluid is cooled by the heat storage elements and then leaves the heat exchange chamber 20 via the outlet 50.

After the charging is completed, the heat exchange chamber 20 may be left in a standstill period of hours or even days until the stored thermal energy is needed and discharged by feeding the cold working fluid to the outlet 50. After having flown through the heat exchange chamber 20 and the heat storage elements, the thus heated working fluid is ejected from the inlet 30 at the left-hand side in Fig. 8.

Experiments have shown that the heat exchange chamber exhibits areas of different flow resistances due to different temperatures. For example, the hot working fluid (hot air) hardly enters the areas of a relatively high flow resistances, for example in the lower portion. However, it was also found that when the heat exchange chamber is discharged, the cold air hardly passes through the upper portion.

### Summary of the Invention

There may be a need for a heat accumulator and for a method of operating a heat accumulator having improved efficiency. This need may be met by the subject matters according to the independent claims. The present invention is further developed as set forth in the dependent claims.

The inventors found out that the pressure loss via the heat accumulator during charging shall be reduced in the lower portion relative to the upper portion, and during discharging, the pressure loss in the upper portion shall be reduced relative to the lower portion.

According to a first aspect of the invention, a heat accumulator comprises a heat exchange chamber having a lower portion and an upper portion and being configured to accommodate heat storage elements therein for storing thermal energy, wherein the heat exchange chamber comprises an inlet which is configured to supply a working fluid into the heat exchange chamber. A first pressure loss regulating device is arranged within the flow of the working fluid in the heat exchange chamber and configured to pass the working fluid through, wherein the first pressure loss regulating device is configured to form a first flow resistance for a flow of the working fluid in the first pressure loss regulating device being different to a flow resistance for a flow of the working fluid in the heat exchange chamber adjacent and outside the first pressure loss regulating device.

The first pressure loss regulating device can loosely be arranged within heat storage elements, or the first pressure loss regulating device can be mounted by mechanical links to the heat exchange chamber.

The first flow resistance in the first pressure loss regulating device can be made either higher or lower than the flow resistance for the flow of the working fluid in the heat exchange chamber adjacent and outside the first pressure loss regulating device. By varying geometrical parameters such as a diameter and/or a length of a flow channel within the first pressure loss regulating device, the first flow resistance can be adapted according to the demands. For example, by using a relative large diameter, the first flow resistance can be made higher than the flow resistance for the flow of the working fluid in the heat exchange chamber adjacent and outside the first pressure loss regulating device. In contrast, by using a relative small diameter, the first flow resistance can be made smaller than the flow resistance for the flow of the working fluid in the heat exchange chamber adjacent and outside the first pressure loss regulating device.

Advantageously, the efficiency of the heat accumulator is remarkably increased since larger areas of the heat exchange chamber can be used up to the complete storage bubble and not just a few areas as was previously the case. In addition, it is possible that the still warm working fluid does not only flow through the relatively cold areas during discharging, but also through the warmer areas and thus does not lose as much heat.

Preferably, the heat exchange chamber comprises an outlet which is configured to discharge the working fluid to the outside of the heat exchange chamber, wherein the heat exchange chamber has a first distance d1 between the inlet and the outlet, and the first pressure loss regulating device is arranged in a second distance d2 from the inlet, either with d2 > 0.25 d1, d2 > 0.33 d1, or d2 > 0.5 d1.

Preferably, the first pressure loss regulating device is arranged in the lower portion of the heat exchange chamber, wherein the heat exchange chamber comprises an outlet which is configured to discharge the working fluid to the outside of the heat exchange chamber and to supply another working fluid into the heat exchange chamber, and a second pressure loss regulating device which is arranged within the flow of the other working fluid in the heat exchange chamber and configured to pass the other working fluid through, wherein the second pressure loss regulating device is configured to form a second flow resistance for a flow of the other working fluid in the second pressure loss regulating device being different to a flow resistance for a flow of the other working fluid in the heat exchange chamber adjacent and outside the second pressure loss regulating device. The second pressure loss regulating device is arranged in the upper portion of the heat exchange chamber.

Preferably, at least one of the first pressure loss regulating device and the second pressure loss regulating device is configured to pass through the working fluid in one direction and to block a flow of the working fluid in a direction opposite to the one direction.

Preferably, the first pressure loss regulating device and/or the second pressure loss regulating device comprises a tube portion, a ball arranged in the tube portion to be axially movable between a first stop portion and a second stop portion of the tube portion. The tube portion has at least one input opening being arranged at a side of the first stop portion, which is opposed to the second stop portion, and at least one circumferential output opening which is arranged in a circumferential wall of the tube portion between the first stop portion and the second stop portion.

This embodiment of the pressure loss regulating device is a tube which is opened by a one-sided closing mechanism for a flow in one direction, and it is closed to a flow in the opposite direction. During charging, the flow resistance is reduced in the first pressure loss regulating device so that the flow flows through the tube portion according to the principle of minimum work, and during discharging, the flow resistance is increased. This is enabled by the ball that can move freely in the pipe. This ball is moved away from the charging side by the flow during charging, and the working fluid (air) can flow through the output opening(s) such as bores or grooves from the tube portion into the heat accumulator.

The diameter and length of the tube portion and the diameter of the ball can be adapted to achieve different flow resistances. Advantageously, by varying the length of the tube portion, the hot flow can be distributed over the entire heat accumulator during charging. Another major advantage is that the pressure loss regulating device, which is formed by a tube portion, acts in both directions and does not require two different components for charging and discharging. Therefore, the costs can remarkably be reduced.

Preferably, the first stop portion and/or the second stop portion is provided with a seal to provide for a sealing between the tube portion and the ball. A seal on both sides of the tube portion can ensure that the ball cannot leave the tube portion and that the flow cannot pass through gaps to the right-hand side and the left-hand side of the ball. For example during discharging, the ball of the first pressure loss regulating device moves in the opposite direction, where are no openings so that the working fluid (air) cannot continue to flow through the tube portion.

Preferably, the tube portion is divided in a first part and a second part, the first part comprises the first stop portion and the second part comprises the second stop portion. The first part and the second part can be identically formed in order to save manufacturing costs.

According to a second aspect of the invention, a pressure loss regulating device is provided for the heat accumulator.

According to a third aspect of the invention, a method of operating a heat accumulator is provided, wherein the heat accumulator comprises a heat exchange chamber having a lower portion and an upper portion and being configured to accommodate heat storage elements therein for storing thermal energy, wherein the heat exchange chamber comprises an inlet which is configured to supply a working fluid into the heat exchange chamber. The method comprises a step of arranging a pressure loss regulating device within the flow of the working fluid in the heat exchange chamber, the pressure loss regulating device being configured to pass the working fluid through, wherein the pressure loss regulating device is configured to form a first flow resistance for a flow of the working fluid in the pressure loss regulating device different to a flow resistance for a flow of the working fluid in the heat exchange chamber adjacent and outside the pressure loss regulating device.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a flow diagram of a heat accumulator according to an embodiment of the present invention;
- Fig. 2: shows a pressure loss regulating device according to an embodiment of the present invention;
- Fig. 3: shows a second part of the pressure loss regulating device according to the embodiment of the present invention;
- Fig. 4: shows a first part of the pressure loss regulating device according to the embodiment of the present invention;
- Fig. 5: shows a detail of the first part of the pressure loss regulating device according to the embodiment of the present invention in Fig. 4;
- Fig. 6: shows a schematic view of the heat accumulator according to the embodiment of the present invention;
- Fig. 7: shows a detail of the heat accumulator in Fig. 6; and
- Fig. 8: shows a flow diagram of a heat accumulator according to the prior art.

### Detailed Description

The illustrations in the drawings are schematically. It is noted that in different figures, similar or identical elements are provided with the same reference signs.

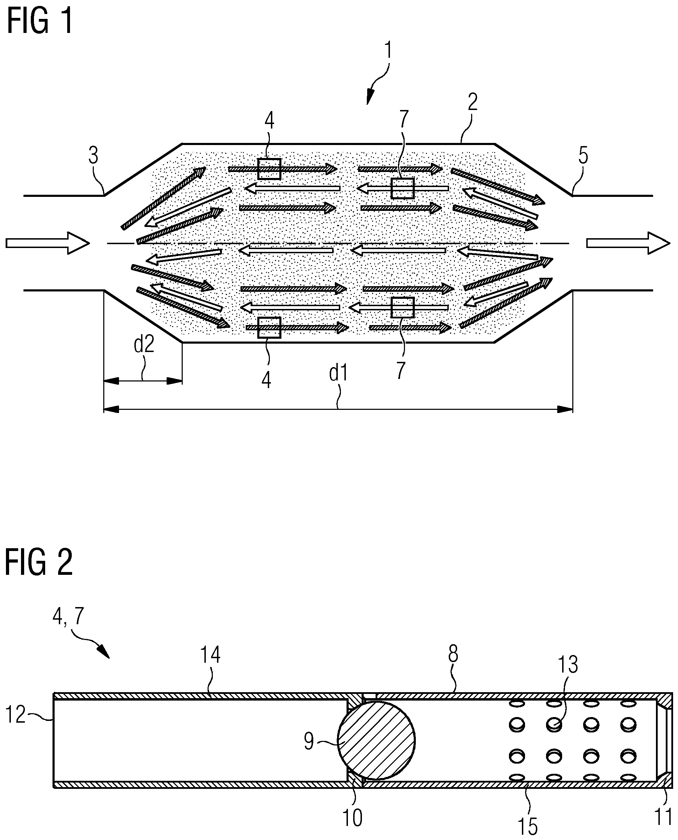

**Fig. 1** shows a flow diagram of a heat accumulator 1 according to an embodiment of the present invention. The heat accumulator 1 comprises a heat exchange chamber 2 having a lower portion and an upper portion. The terms "lower portion" and "upper portion" refer to the orientation of the heat accumulator 1 in the intended use.

The heat accumulator 1 is configured to accommodate heat storage elements for storing thermal energy. The heat storage elements can consist of stones, in particular lava stones, ceramic elements, brick elements, ansit, granite or basalt. The storage elements are provided as bulk material and have a high thermal storage capacity.

The heat exchange chamber 2 further comprises an inlet 3 (which can also be a combined in- and outlet) which is configured to supply a hot working fluid into the heat exchange chamber 2 and a plurality of first pressure loss regulating devices 4. The first pressure loss regulating devices 4 are arranged within the flow of the working fluid in the heat exchange chamber 2 and configured to pass the working fluid through. The first pressure loss regulating devices 4 are configured to form a first flow resistance for a flow of the working fluid in the first pressure loss regulating devices 4 being different to a flow resistance for a flow of the working fluid in the heat exchange chamber 2 adjacent and outside the first pressure loss regulating devices 4. The working fluid can be water, hot or relatively cold steam, air, nitrogen or argon, etc. The thus cooled working fluid leaves the heat exchange chamber 2 via an outlet 5 (or a combined in- and outlet). The flow of the hot working fluid is indicated by arrows from the left side to the right side in Fig. 1.

After the charging is completed, the heat exchange chamber 2 may be left in a standstill period of hours or even days until the stored thermal energy is needed and discharged by feeding another, cold working fluid to the outlet 5 (which is here used as an inlet for the cold working fluid). After having flown through the heat exchange chamber 2 and the heat storage elements, the thus heated working fluid is ejected from the inlet 3 (which is here used as an outlet for the cold working fluid). The flow of the cold working fluid is indicated by arrows from the right side to the left side in Fig. 1.

The heat exchange chamber 2 has a first distance d1 between the inlet 3 and the outlet 5, wherein at least one of the first pressure loss regulating devices 4 is arranged in a second distance d2 from the inlet 3 and wherein the relation d2 > 0.25 d1 holds. Other first pressure loss regulating devices 4 can be arranged such that the relations d2 > 0.33 d1 and d2 > 0.5 d1, respectively, hold.

At least one of the first pressure loss regulating devices 4 is arranged in the lower portion of the heat exchange chamber 2. At least one second pressure loss regulating device 7 is arranged within the flow of the other, cold working fluid in the heat exchange chamber 2 and configured to pass the cold working fluid through, wherein the second pressure loss regulating device 7 is configured to form a second flow resistance for a flow of the cold working fluid in the second pressure loss regulating device 7 being different to a flow resistance for a flow of the cold working fluid in the heat exchange chamber 2 adjacent and outside the second pressure loss regulating device 7. The second pressure loss regulating device 7 is arranged in the upper portion of the heat exchange chamber 2.

The first and second pressure loss regulating devices 4, 7 are configured to pass through the working fluids in one direction and to block a flow of the working fluids in a direction opposite to the one direction.

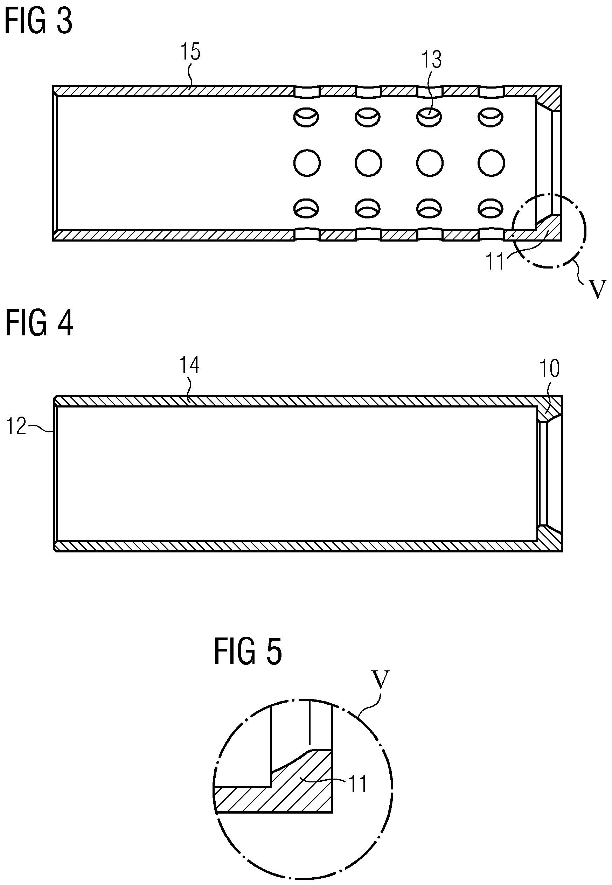

**Fig. 2** shows a pressure loss regulating device 4, 7 according to an embodiment of the present invention; **Fig. 3** shows a second part of the pressure loss regulating device 4, 7 according to the embodiment of the present invention; **Fig. 4** shows a shows a first part of the pressure loss regulating device 4, 7 according to the embodiment of the present invention; and **Fig. 5** shows a detail of the first part of the pressure loss regulating device 4, 7 according to the embodiment of the present invention in Fig. 4.

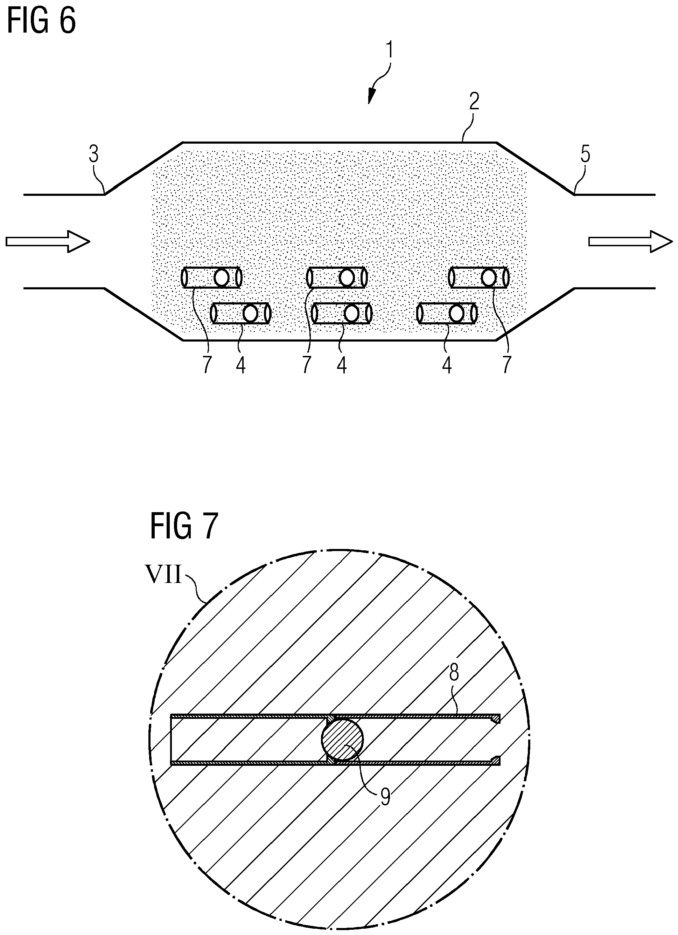

**Fig. 6** shows a schematic view of the heat accumulator 1 according to the embodiment of the present invention, and **Fig. 7** shows a detail of the heat accumulator 1 in Fig. 6.

The pressure loss regulating device 4, 7 comprises a tube portion 8 and a ball 9 arranged in the tube portion 8 to be axially movable between a first stop portion 10 and a second stop portion 11 of the tube portion 8. The tube portion 8 has at least one input opening 12 being arranged at a side of the first stop portion 10, which is opposed to the second stop portion 11, and a plurality of circumferential output openings 13 which are arranged in a circumferential wall of the tube portion 8 between the first stop portion 10 and the second stop portion 11.

The first stop portion 10 and the second stop portion 11 are provided with a corresponding seal to provide for a sealing between the tube portion 8 and the ball 9.

The tube portion 8 is divided in a first part 14 and a second part 15, the first part 14 comprises the first stop portion 10 and the second part 15 comprises the second stop portion 11.

The operation of the pressure loss regulating device 4, 7, which is embodied by the tube portion, is as follows: For example during charging, the hot working fluid enters the tube portion 8 of the first pressure loss regulating device 4 through the input opening 12 and moves the ball 9 from the first stop portion 10 to the second stop portion 11. The working fluid is then forced to leave the tube portion 8 through the output openings 13 to enter the heat exchange chamber 2.

During discharging, the cold working fluid enters the tube portion 8 of the pressure loss regulating device 4 through the output openings 13 and moves the ball 9 back from the second stop portion 11 to the first stop portion 10. The working fluid cannot pass further through the first stop portion 10 due to the sealing. In other words, the working fluid cannot pass from the second part 15 of the tube portion 8 to the first part 14 of the tube portion 8.

The present invention can be modified in that the output openings 13 are positioned along a helix so that a uniform flow through the heat exchange chamber 2 can be achieved. In another modification, at least one output opening 13 can be arranged in a shape of a slit.

As a further modification, instead of the ball locking mechanism as described above, other locking mechanisms can also be used. For example, it is possible to use a type of one-way valve or check valve. For this purpose, an air-impermeable foil can be placed over a perforated sheet and fixed so that the air flows in one direction only against the foil, but cannot pass the edges, and in the other direction, the foil can slightly be lifted from the sheet and can flow through the pipe.

Another modification would be a flap that can be opened in one direction by the flow via a hinge. Opening in the other direction is not possible because the flap is pressed against a sheet metal and thus seals the pipe. However, a square pipe cross-section would be an advantage here.

The pressure loss regulating devices 4, 7 are passively controlled. In a modification, the pressure loss regulating devices can actively be controlled. The here described mode is a passive mode. For example, an active pressure loss regulating device may be actuated by a motor or a pneumatic control.

It is possible to provide the inlet 3 with a diffusor and to provide the outlet 5 with a nozzle.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A heat accumulator (1) comprising:
a heat exchange chamber (2) having a lower portion and an upper portion and being configured to accommodate heat storage elements therein for storing thermal energy, wherein the heat exchange chamber (2) comprises an inlet (3) which is configured to supply a working fluid into the heat exchange chamber (2); and
a first pressure loss regulating device (4) which is arranged within the flow of the working fluid in the heat exchange chamber (2) and configured to pass the working fluid through or by, wherein the first pressure loss regulating device (4) is configured to form a first flow resistance for a flow of the working fluid in the first pressure loss regulating device (4) being different to a flow resistance for a flow of the working fluid in the heat exchange chamber (2) adjacent and outside the first pressure loss regulating device (4).

2. The heat accumulator (1) according to the preceding claim, wherein
the heat exchange chamber (2) comprises an outlet (5) which is configured to discharge the working fluid to the outside of the heat exchange chamber (2), wherein the heat exchange chamber (2) has a first distance d1 between the inlet (3) and the outlet (5); and
the first pressure loss regulating device (4) is configured to release the working fluid into the heat exchange chamber (2) in a second distance d2 from the inlet (3), either with d2 > 0.25 d1, d2 > 0.33 d1, or d2 > 0.5 d1.

3. The heat accumulator (1) according to any one of the preceding claims, wherein
the first pressure loss regulating device (4) is arranged in the lower portion of the heat exchange chamber (2); and
wherein the heat exchange chamber (2) comprises an outlet (5) which is configured to discharge the working fluid to the outside of the heat exchange chamber (2) and to supply another working fluid into the heat exchange chamber (2), and a second pressure loss regulating device (7) which is arranged within the flow of the other working fluid in the heat exchange chamber (2) and configured to pass the other working fluid through, wherein the second pressure loss regulating device (7) is configured to form a second flow resistance for a flow of the other working fluid in the second pressure loss regulating device (7) being different to a flow resistance for a flow of the other working fluid in the heat exchange chamber (2) adjacent and outside the second pressure loss regulating device (7); and
the second pressure loss regulating device (7) is arranged in the upper portion of the heat exchange chamber (2).

4. The heat accumulator (1) according to any one of the preceding claims, wherein
at least one of the first pressure loss regulating device (4) and the second pressure loss regulating device (7) is configured to pass through the working fluid in one direction and to block a flow of the working fluid in a direction opposite to the one direction.

5. The heat accumulator according to any one of the preceding claims, wherein
the first pressure loss regulating device (4) and/or the second pressure loss regulating device (7) comprises:
a tube portion (8); and
a ball (9) arranged in the tube portion (8) to be axially movable between a first stop portion (10) and a second stop portion (11) of the tube portion (8); wherein
the tube portion (8) has at least one input opening (12) being arranged at a side of the first stop portion (10), which is opposed to the second stop portion (11), and at least one circumferential output opening (13) which is arranged in a circumferential wall of the tube portion (8) between the first stop portion (10) and the second stop portion (11) .

6. The heat accumulator (1) according to the preceding claim, wherein
the first stop portion (10) and/or the second stop portion (11) is provided with a seal to provide for a sealing between the tube portion (8) and the ball (9).

7. The heat accumulator according to any one of the preceding claims 5 and 6, wherein
the tube portion (8) is divided in a first part (14) and a second part (15), the first part (14) comprises the first stop portion (10) and the second part (15) comprises the second stop portion (11).

8. A pressure loss regulating device (4, 7) for a heat accumulator according to any one of the preceding claims.

9. A method of operating a heat accumulator, the heat accumulator (1) comprising a heat exchange chamber (2) having a lower portion and an upper portion and being configured to accommodate heat storage elements therein for storing thermal energy, wherein the heat exchange chamber (2) comprises an inlet (3) which is configured to supply a working fluid into the heat exchange chamber (2); wherein the method comprises a step of:
arranging a pressure loss regulating device (4) within the flow of the working fluid in the heat exchange chamber (2), the pressure loss regulating device (4) being configured to pass the working fluid through, wherein the pressure loss regulating device (4) is configured to form a first flow resistance for a flow of the working fluid in the pressure loss regulating device (4) different to a flow resistance for a flow of the working fluid in the heat exchange chamber (2) adjacent and outside the pressure loss regulating device (4).
